# EUROPÄISCHE PATENTSCHRIFT

(11) **EP 1 636 737 B1**
(45) Veröffentlichungstag und Bekanntmachung des Hinweises auf die Patenterteilung: **20.02.2013**
(21) Anmeldenummer: 04739935.7
(22) Anmeldetag: 16.06.2004
(51) Int. Cl.: G06K 19/16

(54) **OPTISCHES SICHERHEITSELEMENT**
OPTICAL SECURITY ELEMENT
ELEMENT DE SECURITE OPTIQUE

(30) Priorität: 25.06.2003 DE 10328760
(43) Veröffentlichungstag der Anmeldung: 22.03.2006
(73) Patentinhaber: OVD Kinegram AG, 6301 Zug (CH)
(72) Erfinder: SCHILLING, Andreas, CH-6332 Hagendorn (CH); TOMPKIN, Wayne, Robert, CH-5400 Baden (CH); STAUB, René, CH-6332 Hagendorn (CH)
(74) Vertreter: Zinsinger, Norbert
(86) Internationale Anmeldenummer: PCT/EP2004/006467
(87) Internationale Veröffentlichungsnummer: WO 2004/113954

(56) Entgegenhaltungen:
- EP-A- 0 520 363
- WO-A-03/009225
- DE-A- 10 044 465
- US-A- 5 379 131
- US-A- 5 760 961

## Beschreibung

Die Erfindung betrifft ein optisches Sicherheitselement mit einer Substratschicht, bei dem in einem Flächenbereich der Substratschicht bereichsweise eine erste Mikrostruktur zur Erzeugung eines ersten optisch erkennbaren Effekts in die Substratschicht abgeformt ist.

In US 6 351 537 B1 wird die Verwendung eines Sicherheitselements beschrieben, das ein Hologramm und ein verstecktes Bild auf einem gemeinsamen Träger-Substrat implementiert. Bei dem Hologramm handelt es sich um ein im Tageslicht sichtbares Hologramm, das durch eine in einen Photopolymerfilm abgeformte beugungsoptische Struktur generiert wird und ohne die Verwendung einer monochromatischen, kohärenten Lichtquelle (Laser) sichtbar ist. Das versteckte Bild ist auf dem Substrat vorzugsweise in der Nähe des Hologramms angeordnet. Das versteckte Bild wird mittels einer Decodiervorrichtung sichtbar gemacht. Als Decodiervorrichtung werden digitale Kopierer oder Scanner verwendet. Weiter wird beschrieben, als Decodiervorrichtung einen transparenten Träger zu verwenden, auf dem ein Linienraster mit einem der gewünschten Abtastfrequenz entsprechenden Linienabstand aufgedruckt ist.

Das versteckte Bild wird dadurch aus einem Ausgangsbild erzeugt, dass zuerst die Frequenz-Komponenten des Ausgangsbildes, die grösser als die halbe Abtast-Frequenz der Decodiervorrichtung sind; entfernt werden und die verbleibenden Frequenz-Komponenten sodann an der Frequenzachse gespiegelt werden, die der halben Abtast-Frequenz entspricht.

Hierdurch wird von dem Substrat ein erstes Sicherheitsmerkmal, nämlich das Hologramm, und ein zweites Sicherheitsmerkmal, nämlich das versteckte Bild, bereit gestellt, wodurch sich die Anzahl der Sicherheitsmerkmale und damit die Fälschungssicherheit erhöht.

WO 03/009225 A offenbart in Figur 21 C ein optisches Sicherheitselement gemäß dem Oberbegriff des Ansprüch 1, mit einem ersten gleichmäßigen Muster aus Elementen wie Pixeln, Punkten oder Linien, die einen gegenseitigen Abstand im Bereich von ca. 30 µm bis 200 µm aufweisen. Durch kleine, mit dem bloßen Auge nicht wahrnehmbare Veränderungen der Positionen einzelner Elemente ist in das erste Muster eine "verborgene" Information kodiert. Bei Auflegen einer Dekodierfolie mit einem zweiten gleichmäßigen Muster auf das Sicherheitselement entsteht durch die Überlagerung beider Muster eine Moiré-Struktur, welche die bisher "verborgene" Information erkennen lässt.

US 5 999 280 beschreibt ein holographisches Verfahren zur Erhöhung der Fälschungssicherheit, bei dem in einem Hologramm ein verstecktes Bild geformt ist, das nur mittels einer speziellen Auswerteeinrichtung erkennbar ist. Nur wenn die Auswerteeinrichtung über das Hologramm bewegt wird, dann kann das versteckte Bild von dem menschlichen Betrachter optisch erfasst werden.

Ein derartiges Hologramm mit einem versteckten Bild wird hierbei in einem Codier-Prozess erzeugt, dem zum einen ein Hintergrundbild und zum anderen das in dem Hologramm zu versteckende Bild zugrunde liegen. Das Hintergrundbild besteht aus einer Vielzahl paralleler, schwarzer Streifen. In dem Codier-Prozess werden nun diejenigen Teile des zu versteckenden Musters, die über den schwarzen Streifen des Hintergrundbildes liegen, in weiss konvertiert und diejenigen Teile des zu versteckenden Bildes, die über dem weissen Teil des Hintergrundbildes liegen, in schwarz belassen. Um das in dem sich so ergebenden Bild versteckte Musters noch weniger erkennbar für das unbewaffnete Auge eines Betrachters zu machen, wird das sich ergebende Bild weiter mit einem optischen Rausch-Muster überlagert.

Der Erfindung liegt nun die Aufgabe zugrunde, die Fälschungssicherheit von optischen Sicherheitselementen weiter zu verbessern.

Diese Aufgabe wird von einem optischen Sicherheitselement gemäß Anspruch 1 gelöst.

Ein Moiré-Muster ist hierbei ein aus sich wiederholenden Strukturen gebildetes Muster, das bei der Überlagerung mit oder Betrachtung durch ein weiteres, von sich wiederholenden Strukturen gebildetes Muster ein neues Muster zeigt, das in dem Moiré-Muster versteckt ist.

Durch die Überlagerung eines Moiré-Musters mit einer Dekodiervorrichtung wird durch den Moiré-Effekt das in dem Moiré-Muster versteckte Muster sichtbar. Der klassische Moiré-Effekt ergibt sich aus der Interaktion zwischen sich überlagernden dunklen und hellen Strukturen. Er resultiert aus der geometrischen Verteilung von dunklen und hellen Bereichen in den sich überlagernden Bereichen, wobei Bereiche, in denen dunkle Elemente aufeinanderfallen heller als Bereiche erscheinen, in denen die dunklen Elemente der sich überlagernden Bereiche nebeneinander liegen.

Die Erfindung stellt ein Sicherheitselement zur Verfügung, das durch das Ineinandergreifen verschiedener Sicherheitsmerkmale nur sehr schwer nachahmbar ist. Durch die Substrukturierung von in Form eines Moiré-Musters angeordneten mikroskopisch feinen Musterbereichen einer Mikrostruktur werden zusätzliche Informationen in dem Flächenbereich codiert, die weder durch das blosse Auge noch durch das dem Moiré-Muster zugeordnete Verifizierungselement erkennbar sind. Die konkrete Ausgestaltung der Substruktur kann jedoch mit einer Lupe oder einem Mikroskop erkannt werden und als zusätzliches Sicherheitsmerkmal oder zur Kennzeichnung dienen. Da die Substrukturierung weiter Auswirkung auf die mittlere Flächenbelegung innerhalb der Musterbereiche des Moiré-Musters hat, wirkt sich die Vornahme von Änderungen in der Substrukturierung auch auf die optischen Effekte aus, die bei der Prüfung des Flächenbereiches mittels eines dem Moiré-Muster zugeordneten Verifizierungselement sichtbar werden. So werden beispielsweise derartige Änderungen durch das Entstehen von inhomogene Bereichen (Betrachtung mit/ ohne Verifizierungselement) oder durch Veränderung der sich beim Verschieben oder Verdrehen des Verifizierungselements ergebenen optischen Effekte erkennbar. Die von der Substrukturierung, der Anordnung der Musterbereiche und der Mikrostruktur erzeugten optischen Effekte greifen so ineinander und überlagern sich, wodurch eine Nachahmung erschwert und Fälschungen leicht erkennbar sind. Weiter können die von einem erfindungsgemässen Sicherheitselement generierten optischen Effekte nicht mittels eines in einem Hologramm enthaltenen Moiré-Bildes nachgeahmt werden. Eine Nachbildung mittels herkömmlicher holographischer Techniken, wie dies beispielsweise bei der bloßen Implementierung eines versteckten Bildes in einem Hologram möglich ist, ist demnach nicht möglich. Dadurch wird die Fälschungssicherheit weiter erhöht.

Vorteilhafte Weiterbildungen der Erfindung sind in den Unteransprüchen bezeichnet.

Es ist vorgesehen, als erste Mikrostruktur ein Beugungsgitter, eine Beugungsstruktur zur Erzeugung eines ersten Hologramms oder eine Mattstruktur zu verwenden. Als vorteilhaft hat es sich gezeigt, in dem Hintergrundbereich eine reflektierende Fläche, eine transparente Fläche (Mikro-Metallisierung), ein zweites, sich von dem ersten Beugungsgitter unterscheidendes Beugungsgitter, eine Beugungsstruktur zur Erzeugung eines zweiten Hologramms oder eine von der ersten Mattstruktur unterschiedliche zweite Mattstruktur abzuformen.

Die ersten und zweiten Beugungsgitter können sich hierbei beispielsweise im Azimutwinkel, Gitterfrequenz oder Profilform unterscheiden.

Unter Mattstrukturen sind Strukturen mit streuenden Eigenschaften zu verstehen. Diese streuenden Eigenschaften können durch eine Mikrostruktur mit einem stochastischen Oberflächenprofil oder durch eine Beugungsstruktur erzeugt werden, die derartige Eigenschaften besitzt. Derartige Beugungsstrukturen können auch holographisch erzeugt werden. Bei den ersten und zweiten Mattstrukturen kann es sich um isotrope oder anisotrope Mattstrukturen handeln. Isotrope Mattstrukturen haben einen symmetrischen Streukegel, wohingegen anisotrope Mattstrukturen ein asymmetrisches Streuverhalten zeigen und beispielsweise eine bevorzugte Streurichtung besitzen. Die erste und die zweite Mattstruktur unterscheiden sich hierbei beispielsweise in dem Öffnungswinkel des Streukegels und/oder in der bevorzugten Streurichtung.

Natürlich ist es auch möglich, dass der Hintergrundbereich unterschiedliche Mikrostrukturen aufweist.

Dadurch, dass in dem Hintergrundbereich eine von der Mikrostruktur des Musterbereichs unterschiedliche Mikrostruktur abgeformt wird, treten weitere optische Überlagerungseffekte auf, wodurch die Fälschungssicherheit des optischen Sicherheitselements weiter verbessert wird.

Weiter ist es auch möglich, Mikrometallisierung als weitere Variante zur Substrukturierung einzusetzen. Der Kontrast wird durch den Unterschied zwischen reflektierender Schicht und transparentem Bereich erzielt. In diesem Fall kann der Musterbereich auch als Spiegel ausgestaltet sein. Weiter kann die Mikrometallisierung mit einer semitransparenten HRI-Schicht im Hintergrundbereich kombiniert werden. Sowohl im Musterbereich als auch im Hintergrundbereich kann zudem dieselbe beugungsoptische Struktur vorliegen, wobei der Kontrast durch das unterschiedliche Reflexionsvermögen erzielt wird.

Es ist vorteilhaft, dass das Moiré-Muster aus einem Linienraster aus einer Vielzahl von Linien mit einem Linienabstand im Bereich von 40 bis 200 µm besteht. Dieses Linienraster ist bereichsweise zur Erzeugung der verdeckten Information phasenverschoben. Die Phasenverschiebung beträgt hierbei vorzugsweise eine halbe Raster-Periode. Neben einem linearen Linienraster ist es auch möglich, dass die Linien des Linienrasters gekrümmte Bereiche aufweisen und beispielsweise wellenförmig oder kreisförmig angeordnet sind. Zur Decodierung der versteckten Information ist dann ein entsprechendes Verifizierungselement notwendig, das ebenso über ein derart geformtes Linienraster verfügt. Auf diese Art und Weise ist es möglich, dass die Decodierung der versteckten Information nur mittels eines ganz speziellen, individuellen Verifizierungselements möglich ist, was die Fälschungssicherheit des optischen Sicherheitselements weiter erhöht. Weiter besteht die Möglichkeit, das Moiré-Muster aus zwei um 90 Grad gegeneinander verdrehte Linienraster aufzubauen. Hierdurch wird der vorteilhafte Effekt erzielt, dass sich nicht nur eine, sondern zwei unterschiedliche versteckte Informationen in dem Moiré-Muster codieren lassen. Durch ein Verdrehen des Verifizierungselements sind diese Informationen nacheinander auswertbar. Auch dies erhöht die Fälschungssicherheit des optischen Sicherheitselements.

Die mittlere Flächenbelegung des Moiré-Musters in Bezug auf das Auflösungsvermögen des menschlichen Auges ist vorzugsweise konstant. Dadurch ist es dem menschlichen Betrachter nicht möglich, das Vorliegen weiterer Sicherheitsmerkmale ohne Hilfsmittel zu erkennen.

Vorteilhafte Effekte lassen sich dadurch erzielen, dass die mittlere Flächenbelegung des Moiré-Musters in Bezug auf das Auflösungsvermögen des menschlichen Auges konstant ist, die Flächenbelegung der Musterbereiche jedoch durch partiell unterschiedliche Substrukturierung variiert ist. Hierdurch ist es möglich, durch die Substrukturierung für das menschliche Auge optisch erkennbare Muster in dem Flächenbereich zu generieren, was die Fälschungssicherheit weiter erhöht.

Es vorgesehen, dass die Substrukturierungs-Funktion ein nicht zusammenhängendes Substrukturierungs-Muster beschreibt.

Es ist vorgesehen, dass die Substrukturierungs-Funktion ein aus einer Vielzahl gleichartiger Einzelelemente aufgebautes Substrukturierungs-Muster beschreibt. Weitere Vorteile werden dadurch erzielt, dass die Abstände der einzelnen Elemente oder deren Orientierung zur Codierung weiterer Informationen in der Substrukturierung variiert werden. Diese zusätzlichen Informationen können als weiteres Sicherheitsmerkmal oder zur Datenspeicherung verwendet werden. Besonders vorteilhaft ist, dass - wie bereits oben ausgeführt - hierbei die mittlere, für das menschliche Auge auflösbare Flächenbelegung des Substrukturierungs-Musters konstant bleibt.

Im Folgenden wird die Erfindung anhand von mehreren Ausführungsbeispielen unter Zuhilfenahme der beiliegenden Zeichnungen beispielhaft erläutert.
- Fig. 1: zeigt eine Schnitt-Darstellung eines optischen Sicherheitselements.
- Fig. 2: zeigt eine schematische Darstellung eines Flächenbereiches des optischen Sicherheitselements nach Fig. 1.
- Fig. 3a und Fig. 3b: zeigen schematische Darstellungen möglicher Substrukturierungs-Muster für ein optisches Sicherheitselement.
- Fig. 3c und 3d: zeigen schematische Darstellungen möglicher Substrukturierungs-Muster für ein erfindungsgemäßes optisches Sicherheitselement.
- Fig. 4: zeigt eine schematische Darstellung eines Flächenbereiches eines optischen Sicherheitselements.

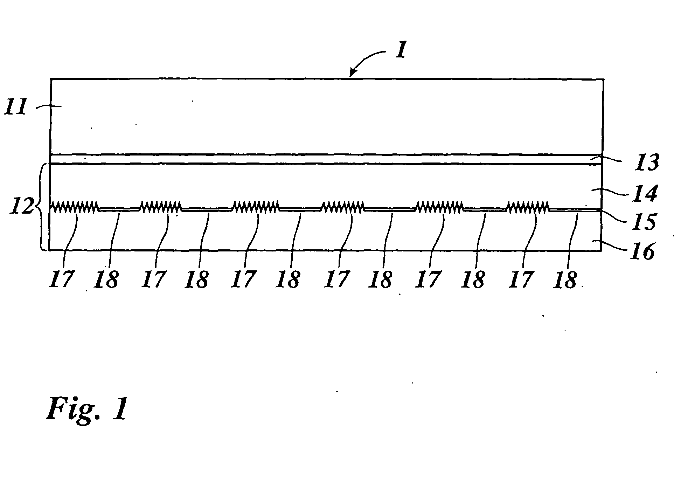

Fig. 1 zeigt eine Prägefolie 1, die eine Trägerfolie 11 und eine als optisches Sicherheitselement dienende Übertragungslage 12 aufweist. Die Übertragungslage 12 weist eine Ablöse- und/oder Schutzlackschicht 13, eine Replizierschicht 14, eine Reflexionsschicht 15 und eine Klebeschicht 16 auf.

Die Trägerschicht 21 besteht beispielsweise aus einer Polyesterfolie einer Dicke von 12 µm bis 50 µm. Auf diese Trägerfolie wird die Ablöse- und/oder Schutzlackschicht 13 in einer Dicke von 0,3 bis 1,2 µm aufgebracht. Auf die Ablöse- und/oder Schutzlackschicht wird nun die Replizierschicht 14 aufgebracht. Bei der Replizierschicht 14 handelt es sich vorzugsweise um ein transparentes, thermoplastisches Kunststoffmaterial, das beispielsweise mittels eines Druckverfahrens vollflächig auf den von der Trägerfolie 11 und der Schutzlack- und/oder Ablöseschicht 14 gebildeten Folienkörper aufgebracht wird. Der Auftrag kann beispielsweise mit einer Linienraster-Tiefdruckwalze mit einem Auftragsgewicht von 2,2 g/mm nach Trocknung erfolgen, wobei die Trocknung in einem Trockenkanal bei einer Temperatur von 100 bis 120 °C erfolgt. In die Replizierschicht wird nun mittels eines Prägewerkzeugs in Bereichen 17 eine mikroskopische Oberflächenstruktur repliziert. Beispielsweise wird so die mikroskopische Oberflächenstruktur bei etwa 130 °C mit einer aus Nickel bestehenden Matrize eingeprägt.

Es ist jedoch auch möglich, dass die Replikation mittels eines UV-Replikationsverfahrens durchgeführt wird, bei dem ein UV-Replizierlack auf den von der Trägerfolie 11 und der Ablöse- und/oder Schutzlackschicht 13 gebildeten Folienkörper aufgetragen und anschliessend zur Replikation der Mikrostruktur partiell mit UV-Licht bestrahlt wird.

Nach der Replikation der Mikrostruktur in die Replizierschicht 14 erhärtet der Replizierlack durch Vernetzung oder in sonstiger Weise.

Weiter ist es möglich, dass die Mikrostruktur mittels holographischer Methoden in der Schicht 14 abgeformt wird. Hierzu wird bei der holographischen Belichtung der Hintergrundbereich mit einer entsprechenden Maske abgedeckt oder die Mikrostruktur nach der Belichtung in dem Hintergrundbereich entfernt.

Auf die Replizierschicht 14 wird nun eine dünne Reflexionsschicht 15 aufgebracht. Bei der Reflexionsschicht 15 handelt es sich vorzugsweise um eine dünne, aufgedampfte Metallschicht oder um eine HRI-Schicht (HRI = "High Reflection Index"). Als Materialien für eine HRI-Schicht kommen beispielsweise TiO₂, ZnS oder Nb₂O₅ in Frage. Als Material für die Metallschicht kommen im wesentlichen Chrom, Aluminium, Kupfer, Eisen, Nickel, Silber, Gold oder eine Legierung mit diesen Materialien in Frage. Weiter kann Anstelle einer derartigen metallischen oder dielektrischen Reflexionsschicht eine Dünnfilmschichtfolge mit mehreren dielektrischen oder dielektrischen und metallischen Schichten eingesetzt werden.

Auf den so gebildeten Folienkörper wird nun die Klebeschicht 16 aufgebracht, die beispielsweise aus einem thermisch aktivierbaren Kleber besteht.

Zur Aufbringung des optischen Sicherheitselements auf ein Sicherheitsdokument oder einen sonstigen zu sichernden Gegenstand wird die Prägefolie 1 mit der Übertragungslage 12 voran auf das Sicherheitsdokument bzw. den zu sichernden Gegenstand aufgebracht und dann unter Einwirkung von Wärme gegen das Sicherheitsdokument bzw. den zu sichernden Gegenstand gepresst. Dabei verbindet sich die Übertragungslage über die Kleberschicht 16 mit der entsprechenden Oberfläche des Sicherheitsdokuments oder des zu sichernden Gegenstandes. Weiter löst sich infolge der Wärmeentwicklung die Übertragungslage 12 von der Trägerfolie 11, die nun von der Übertragungslage 12 abgezogen und entfernt wird. Auf dem Sicherheitsdokument oder dem zu sichernden Gegenstand ist nun ein erfindungsgemässes optisches Sicherheitselement aufgebracht, das aus der Übertragungslage 12 oder Teilen der Übertragungslage 12 besteht.

Es ist natürlich auch möglich, dass ein erfindungsgemässes optisches Sicherheitselement Teil einer Transfer- oder Laminierfolie ist oder von einer Prägefolie, Stickerfolie, Transferfolie oder Laminierfolie gebildet wird. Weiter ist es auch möglich, dass ein erfindungsgemässes optisches Sicherheitselement neben den in Fig. 1 gezeigten Schichten 13, 14, 15 und 16 weitere Schichten aufweist. Derartige Schichten können beispielsweise (farbige) Dekorschichten oder Schichten eines Dünnfilm-Schichtsystems sein, das blickwinkelabhängige Farbverschiebungen mittels Interferenz erzeugt.

Weiter ist es auch möglich, die Reflexionsschicht 15 nur partiell auszuführen oder auf sie ganz zu verzichten, so dass das optische Sicherheitselement als transparentes und nicht als reflektives Sicherheitselement wirkt. Auch könnte auf die Klebeschicht 16 verzichtet werden.

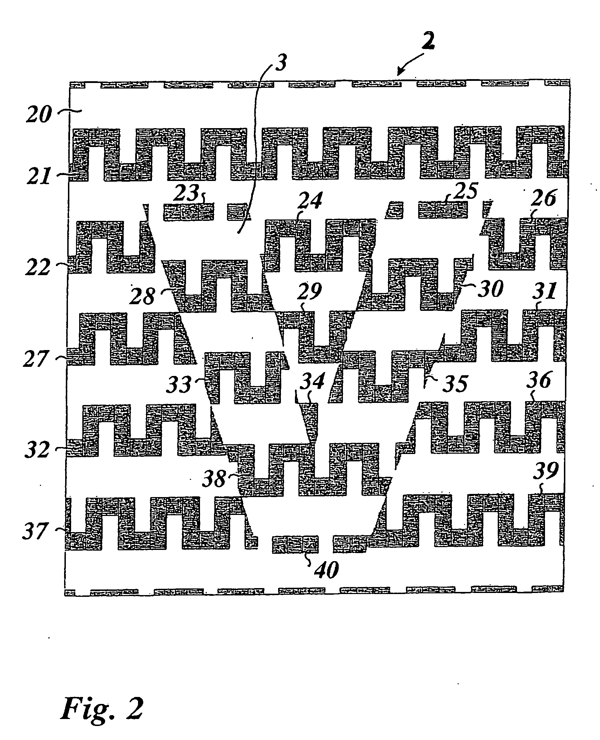

Wie bereits oben erläutert, wird die Mikrostruktur nur bereichsweise in die Replizierschicht 14 repliziert, so dass in der Replizierschicht 14 Bereiche 17 vorliegen, in denen die Mikrostruktur repliziert ist, und Bereiche 18 vorliegen, in denen die Mikrostruktur nicht in die Oberfläche der Replizierschicht 14 repliziert ist. Fig. 2 zeigt nun einen Flächenbereich des von der Übertragungslage 12 gebildeten optischen Sicherheitselements, anhand dessen verdeutlicht wird, in welchen Bereichen eine Replikation der Mikrostruktur in die Oberfläche der Replizierschicht 14 erfolgt.

Fig. 2 zeigt einen Flächenbereich 2, der in einen Hintergrundbereich 20 und mehrere Musterbereiche 21 bis 40 geteilt ist. Wie in Fig. 2 gezeigt, sind die Musterbereiche 21 bis 39 jeweils gemäss einer Substrukturierungs-Funktion substrukturiert, wobei die Substrukturierungs-Funktion eine Substrukturierung des jeweiligen Musterbereiches in Form eines mäanderförmigen Musters beschreibt. Die Musterbereiche 22, 24 und 26 sind von dem Musterbereich 21 bevorzugt 40 bis 300 µm beabstandet. Durch eine derartige Beabstandung wird erzielt, dass zum einen die von den in den Musterbereichen 21, 22, 24 und 26 angeordneten Mikrostrukturen erzeugten optischen Effekte sich im menschlichen Auge mischen und nicht einzeln aufgelöst werden, und dass zum anderen ausreichend grosse Einzelflächen für die jeweilig abgeformte Mikrostruktur zur Verfügung stehen. Entsprechend sind dann auch die Musterbereiche 22, 24, 26, 27, 29, 31, 32, 34, 36, 37 und 39 voneinander beabstandet.

Wie in Fig. 2 gezeigt, sind in einem V-förmigen Teilbereich 3 des Flächenbereiches 2 die Musterbereiche 23, 28, 35, 38, 40, 35, 30 und 24 phasenverschoben gegenüber den sie umgebenden Musterbereichen 21, 22, 26, 27, 29, 31, 32, 34, 36, 37 und 39 angeordnet.

Die Musterbereiche 21 bis 40 bilden demnach ein mittels der oben beschriebenen Substrukturierungs-Funktion substrukturiertes Linienraster mit einer Vielzahl gleichmässig beabstandeter substrukturierter Linien, wobei das Linienraster im Teilbereich 3 zur Erzeugung der versteckten Information phasenverschoben ist.

In den Musterbereichen 21 bis 40 ist nun ein erste Mikrostruktur abgeformt. Bei dieser Mikrostruktur handelt es sich bevorzugt um eine Beugungsstruktur eines 3D- oder 2D/3D-Hologramms.

Weiter ist es möglich, dass die Mikrostruktur von einem Beugungsgitter mit einer Spatialfrequenz von mehr als 300 Linien/mm gebildet wird. Bevorzugte Spatialfrequenzen eines solchen Beugungsgitters liegen im Bereich von 600 bis 1.800 Linien/mm. Weiter kann es auch vorteilhaft sein, ein Beugungsgitter mit einer sehr hohen Spatialfrequenz zu verwenden, die kleiner als die Wellenlänge des Lichts ist. Auch Beugungsgitter nullter Ordnung oder asymmetrische Beugungsgitter können zum Einsatz kommen. Die Gitterparameter des Beugungsgitters können hierbei in den Musterbereichen 21 bis 40 konstant sein, aber auch variiert werden, um so beispielsweise einen Kinegram^{®}-Effekt oder sonstige optische Effekte zu erzeugen, die einen vom Betrachtungswinkel abhängigen optischen Eindruck generieren.

Weiter ist es möglich, dass als Mikrostruktur eine Mattstruktur in den Musterbereichen 21 bis 40 abgeformt wird.

Weiter ist es auch möglich, mittels Teilmetallisierung in den Musterbereichen 21 bis 40 transparente Bereiche vorzusehen, wohingegen im Hintergrundbereich 20 eine diffraktive Struktur vorgesehen wird.

In dem Hintergrundbereich 20, der sich aus den nicht von den Musterbereichen 21 bis 40 bedeckten Telflächen des Flächenbereichs 2 zusammensetzt, ist keine Mikrostruktur in die Replikationsschicht 14 abgeformt, so dass sich dort eine planare reflektierende Fläche ergibt, von der sich die in den Musterbereichen 21 bis 40 abgeformte Mikrostruktur abhebt.

Es ist jedoch auch möglich, dass in dem Hintergrundbereich 20 anstelle-eines planaren reflektierenden Elements ein transmissives Element, ein Beugungsgitter, eine ein Hologram erzeugende Beugungsstruktur oder eine Mattstruktur abgeformt ist.

Ist in den Musterbereichen 21 bis 39 die Beugungsstruktur eines Hologramms abgeformt, so ist in dem Hintergrundbereich 20 bevorzugt eine Mattstruktur, ein Beugungsgitter oder eine Beugungsstruktur eines anderen Hologramms abgeformt, das sich in Betrachtungsrichtung und/oder Farbeindruck vom ersten Hologramm unterscheidet. Ist in den Musterbereichen 21 bis 40 eine Mattstruktur abgeformt, so ist in dem Hintergrundbereich 20 bevorzugt eine zweite Mattstruktur mit einem unterschiedlichen Streuverhalten abgeformt. Ist in den Musterbereichen 21 bis 40 ein Beugungsgitter abgeformt, so ist in dem Hintergrundbereich 20 bevorzugt eine Mattstruktur oder eine sich von diesem Beugungsgitter in den Gitterparametern, beispielsweise in der Linienzahl oder in der Orientierung, unterscheidendes Beugungsgitter angeformt.

Zur Verifikation der in dem Flächenbereich 2 codierten Information (Buchstabe "V") wird ein Verifizierungselement verwendet, das aus einem Linsenraster oder einem gedruckten Linienraster mit einem dem Linienabstand der Musterbereiche 21 bis 40 entsprechenden Linienabstand besteht. Ist das Verifizierungselement derart auf dem Flächenbereich 2 ausgerichtet, dass es die Musterbereiche 21, 22, 24, 26, 27, 29, 31, 32, 34, 36, 37 und 39 abdeckt, so wird der durch die Musterbereiche 21 bis 40 bewirkte optische Effekt nur noch in dem Teilbereich 3 erzeugt. Der Betrachter nimmt damit in dem Teilbereich 3 einen optischen Effekt wahr, der sich aus der Überlagerung des im Hintergrundbereich 20 erzeugten optischen Effekts und des in den Musterbereichen erzeugten optischen Effekts ergibt. Der Betrachter nimmt hingegen in dem den Teilbereich 3 umgebenden Teilbereich des Flächenbereichs 2 lediglich noch den in dem Hintergrundbereich 20 erzeugten optischen Effekt wahr. Ist das Verifizierungselement derart orientiert, dass es die Musterbereiche 23, 25, 28, 30, 33, 35, 38 und 40 abdeckt, so ergibt sich die umgekehrte Situation. Wird kein Verifizierungselement auf den Flächenbereich 2 aufgelegt, so ergibt sich für den menschlichen Betrachter in dem Flächenbereich ein optischer Eindruck, der sich aus der Überlagerung des in den Musterbereichen erzeugten optischen Effekts und des in dem Hintergrundbereich erzeugten optischen Effekts ergibt. Sind in den Musterbereichen und in dem Hintergrundbereich beispielsweise Beugungsstrukturen zweier sich in Betrachtungsrichtung und/oder Farbeindruck unterscheidender Hologramme abgeformt, so sind bei Betrachtung ohne Verifizierungselement beide Hologramme für den Betrachter erkennbar, wobei bei Einsatz eines Verifizierungselements das eine Hologramm lediglich in dem Teilbereich 3 sichtbar ist bzw. das andere Hologramm lediglich in dem den Teilbereich 3 umgebenden Teilbereich des Flächenbereiches 2 sichtbar ist.

Da die mittlere Flächenbelegung der durch die Substrukturierungs-Funktion beschriebenen mäanderförmigen Substrukturierung in Bezug auf das Auflösungsvermögen des menschlichen Auges konstant ist, beeinflusst diese den sich in den oben beschriebenen Situationen ergebenden Betrachtungs-Eindruck nicht. Sie kann jedoch mit einer Lupe oder einem Mikroskop erkannt werden und als zusätzliches Sicherheitsmerkmal oder zur Kennzeichnung dienen. Wie bereits oben beschrieben, ergeben sich beim Verschieben des Verifizierungselements im Flächenbereich 2 durch die Substrukturierung zusätzliche, optisch erkennbare Effekte, die als weiteres Sicherheitsmerkmal dienen können.

Eine Phasenverschiebung von 180 Grad zwischen den Musterbereichen des Teilbereiches 3 und den sie umgebenden Musterbereichen ermöglicht einen besonders großen Kontrast bei Betrachtung durch das Verifizierungselement, da dann der gesamte Flächenbereich der Musterbereiche des Teilbereiches 3 abgedeckt sein kann, wohingegen die diese umgebenden Musterbereiche nicht abgedeckt sind. Natürlich ist es hierbei auch möglich; von der Phasenverschiebung um 180 Grad etwas abzuweichen. Weiter kann es auch Vorteile mit sich bringen, in dem ein oder anderen Teilbereich erheblich von einer Phasenverschiebung von 180 Grad abzuweichen und beispielsweise eine Phasenverschiebung von 45 Grad oder 135 Grad vorzusehen. So ist es beispielsweise möglich, versteckte Graustufenbilder zu realisieren, bei denen die Graustufe mittels der Phasenverschiebung kodiert ist.

Anstelle der Verwendung eines linearen Linienrasters für die Anordnung der Musterbereiche 21 bis 40 ist es möglich, ein komplexes, beispielsweise wellenförmiges Linienraster zu verwenden, wobei hier ebenfalls in Teilbereichen des Linienrasters eine Phasenverschiebung der Musterbereiche vorgenommen wird, um versteckte Informationen in dem Linienraster zu codieren. Zur Auswertung wird ein Verifizierungselement eingesetzt, das Flächenbereiche entsprechend diesem Linienraster abdeckt.

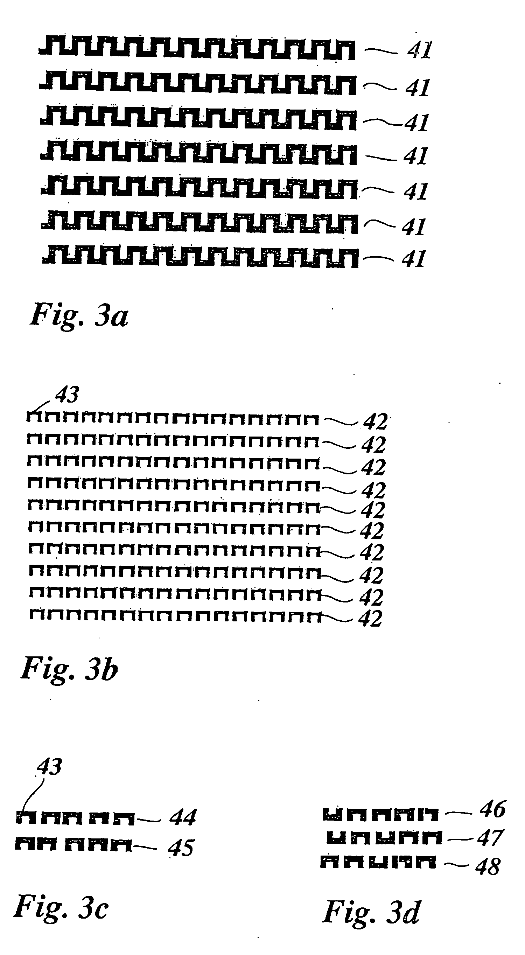

Anhand der Figuren Fig. 3a bis Fig. 4 werden nun weitere Möglichkeiten der Substrukturierung von Musterbereichen erläutert, wobei nurdie Ausführungsformen der Figuren 3c und 3d die beanspruchte Erfindung verkörpern. Fig. 3a zeigt mehrere Musterbereiche 41, die gemäss einer eine mäanderförmige Substrukturierung beschreibenden Substrukturierungs-Funktion substrukturiert sind. Die Substrukturierungs-Funktion braucht hierbei nicht ein zusammenhängendes Substrukturierungs-Muster zu beschreiben. So zeigt Fig. 3b substrukturierte Musterbereiche 42, die gemäss einem aus einer Vielzahl gleichartiger Elemente 43 aufgebauten Substrukturierungs-Musters substrukturiert sind.

Die Abstände der Einzelelemente oder die Orientierung der Einzelelemente kann hierbei variiert werden, so lange die mittlere, für das menschliche Auge auflösbare Flächenbelegung des Substrukturierungs-Musters konstant bleibt.

Fig. 3c zeigt so die Substrukturierung zweier benachbarter Musterbereiche 44 und 45, bei der die Abstände der einzelnen Elemente 43 variiert sind. Wie in Fig. 3c gezeigt, bleibt hierbei die mittlere Flächenbelegung des Substrukturierungs-Musters konstant. Durch eine derartige Änderung von Abständen ist es möglich, zusätzliche, beispielsweise elektronisch auswertbare Informationen in dem optischen Sicherheitselement zu codieren.

Fig. 3d zeigt nun die Möglichkeit, nicht nur durch unterschiedliche Beabstandung, sondern auch durch unterschiedliche Orientierung von Einzelelementen Informationen in die Substrukturierung zu codieren und hierbei die mittlere, für das menschliche Auge auflösbare Flächenbelegung des Substrukturierungs-Musters konstant zu halten.

Fig. 3d zeigt so drei benachbarte Musterbereiche 46, 47 und 48, die jeweils von fünf Einzelelementen gebildet werden, die sich in ihrer Orientierung und in ihrem Abstand unterscheiden.

Weiter ist es auch möglich, Informationen zusätzlich durch unterschiedliche Phasenlage benachbarter Einzelelemente in das Substrukturierungs-Muster zu codieren.

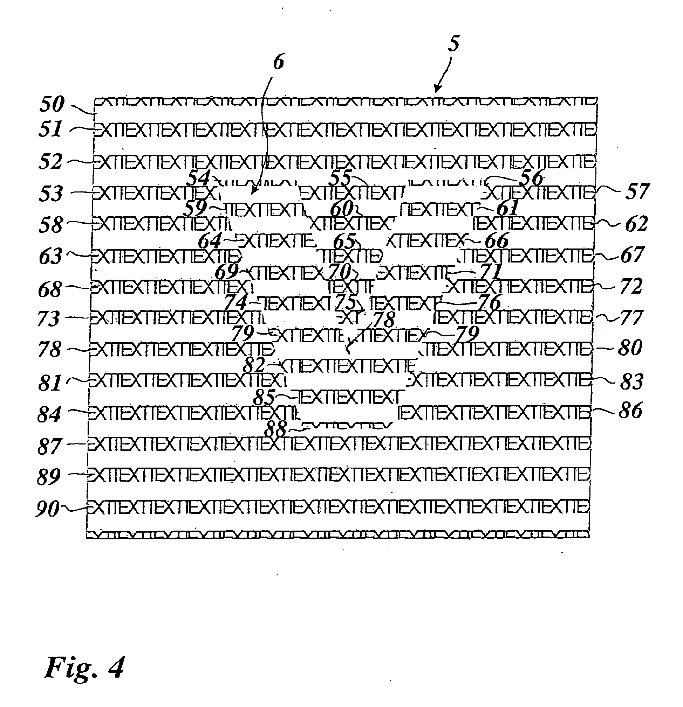

Fig. 4 zeigt nun einen Flächenbereich 5, der in einen Hintergrundbereich 50 und Musterbereiche 51 bis 90 geteilt ist. Die Musterbereiche 50 bis 90 sind hierbei gemäss einer Substrukturierungs-Funktion substrukturiert, die einen Mikrotext oder Nanotext schreibt. Die Buchstabenhöhe dieses Mikro- oder Nanotextes beträgt in dem nicht beanspruchten Beispiel nach Fig. 4 60 µm.

Die Flächenbereiche in einem V-förmigen Teilbereich 6 des Flächenbereiches 5 sind, analog zu dem nicht beanspruchten Beispiel nach Fig. 2, gegenüber den sie umgebenden Musterbereichen phasenverschoben. Der den Hintergrundbereich 50 bildende Teil des optischen Sicherheitselements ist wie der Hintergrundbereich 20 nach den Figuren Fig. 1 und Fig. 2 ausgestaltet und weist so beispielsweise eine reflektierende planare Fläche, ein Beugungsgitter, eine Beugungsstruktur eines Hologramms oder eine Mattstruktur auf. Die von den substrukturierten Musterbereichen 51 bis 90 bedeckten Bereiche des optischen Sicherheitselements sind wie die Musterbereiche 21 bis 40 nach Fig. 2 und Fig. 1 ausgestaltet und weisen beispielsweise ein Beugungsitter, eine Beugungsstruktur eines Hologramms oder eine Mattstruktur auf. Anstelle der in Fig. 4 gezeigten, für die Substrukturierung verwendeten Buchstaben-Kombination "TEXT" ist es natürlich auch möglich, eine andersartige Buchstaben-Kombination zu wählen, die auch einen komplexen Inhalt wiedergeben kann. Weiter ist es auch möglich, anstelle oder in Kombination mit Buchstaben und Buchstabenkombinationen Nano-Bilder für die Substrukturierung zu verwenden.

Weiter ist es auch möglich, das die Substrukturierung sich aus einer Kombination verschiedener, oben beschriebener Substrukturierungsmöglichen zusammensetzt oder beispielsweise zeilenweise abwechselnd die eine oder die andere Substrukturierung verwendet wird.

## Patentansprüche

1. Optisches Sicherheitselement (1) mit einer Substratschicht (14), wobei in einem Flächenbereich (2; 5) der Substratschicht bereichsweise eine erste Mikrostruktur (17) zur Erzeugung eines ersten optisch erkennbaren Effekts in der Substratschicht (14) abgeformt ist, wobei
die erste Mikrostruktur (17) ein erstes Beugungsgitter mit einer Spatialfrequenz von mehr als 300 Linien/mm/, eine Bengungsstruktur zur Erzeugung eines ersten Hologramms oder eine erste Mattstruktur ist, der Flächenbereich (2; 5) in mikroskopisch feine Musterbereiche (21 bis 40; 51 bis 90) und einen Hintergrundbereich (20; 50) geteilt ist und die erste Mikrostruktur (17) in den Musterbereichen (21 bis 39; 51 bis 90), aber nicht in dem Hintergrundbereich (20; 50) abgeformt ist, wobei die mikroskopisch feinen Musterbereiche (21 bis 39; 51 bis 90) in dem Flächenbereich (2; 5) in Form eines Moire-Musters angeordnet sind, in das eine mittels eines zugeordneten Verifizierungselements auswertbare versteckte Information als Sicherheitsmerkmal kodiert ist, indem in ein oder mehreren Teilbereichen (3) des Flächenbereichs (2; 5) die Musterbereiche (23, 25, 28, 30, 33, 35, 38, 40) phasenverschoben gegenüber den sie umgebenden Musterbereichen (21, 22, 24, 26, 27, 29, 31, 32, 34, 36, 37, 39) angeordnet sind, wobei das Moire-Muster mindestens ein Linienraster mit einer Vielzahl von Linien mit einem Linienabstand im Bereich von 40 bis 200 µm aufweist und das Linienraster bereichsweise zur Erzeugung der versteckten Information phasenverschoben ist, und wobei die mikroskopisch feinen Musterbereiche (21 bis 39; 51 bis 90) weiter gemäss einer Substrukturierungs-Funktion substrukturiert sind, die eine als weiteres Sicherheitsmerkmal dienende mikroskopische Substrukturierung des Moire-Musters beschreibt, die zusätzliche Information in dem Flächenbereich kodiert, wobei die zusätzliche Information weder durch das bloße Auge noch durch das Verifizierungselement erkennbar ist und die Substrukturierungs-Funktion ein nicht zusammen-hängendes, aus einer Vielzahl gleichartiger Einzelelemente aufgebautes Substrukturierungs-Muster (42, 44, 45) beschreibt, **dadurch gekennzeichnet, dass**
die Abstände der Einzelelemente (44, 45) und/oder deren Orientierung (46, 47, 48) zur Codierung einer weiteren Information variiert ist, und dass die mittlere, für das
menschliche Auge auflösbare Flächenbelegung des Substrukturierungs-Musters jedoch konstant bleibt.

2. Optisches Sicherheitselement nach Anspruch 1,
**dadurch gekennzeichnet,**
**dass** in dem Hintergrundbereich (20; 50) eine reflektierende Fläche (18) angeordnet ist.

3. Optisches Sicherheitselement nach Anspruch 1,
**Dadurch gekennzeichnet,**
**dass** in dem Hintergrundbereich (20; 50) eine zweite Mikrostruktur abgeformt ist, die von einem vom ersten Beugungsgitter unterschiedlichen zweiten Beugungsgitter gebildet ist.

4. Optisches Sicherheitselement nach Anspruch 1,
**dadurch gekennzeichnet,**
**dass** in dem Hintergrundbereich (20; 50) eine zweite Mikrostruktur abgeformt ist, die von einer Beugungsstruktur zur Erzeugung eines zweiten Hologramms gebildet ist.

5. Optisches Sicherheitselement nach Anspruch 1,
**dadurch gekennzeichnet,**
**dass** in dem Hintergrundbereich (20; 50) eine zweite Mikrostruktur abgeformt ist, die von einer von der ersten Mattstruktur unterschiedlichen zweiten Mattstruktur gebildet ist.

6. Optisches Sicherheitselement nach Anspruch 1,
**dadurch gekennzeichnet,**
**dass** das Linienraster Bereiche aufweist, in denen die Linien des Linienrasters gekrümmt sind.

7. Optisches Sicherheitselement nach einem der Ansprüche 1 bis 5,
**dadurch gekennzeichnet ,**
**dass** das Moiré-Muster aus einem zweidimensionalen Raster besteht.

## Claims

1. Optical security element (1) having a substrate layer (14), wherein, in one planar region (2, 5) of the substrate layer, in some regions a first microstructure (17) is moulded to produce a first optically recognisable effect in the substrate layer (14), wherein
the first microstructure (17) is a first diffraction grating having a spatial frequency of more than 300 lines/mm, a diffraction structure for producing a first hologram, or a first matting structure, the planar region (2, 5) is divided into microscopically fine pattern regions (21 to 40, 51 to 90) and a background region (20, 50) and the first microstructure (17) is moulded into the pattern regions (21 to 39, 51 to 90) but not into the background region (20, 50), wherein the microscopically fine pattern regions (21 to 39, 51 to 90) in the planar region (2, 5) are arranged in the form of a moiré pattern, into which hidden information that can be valuated by means of an assigned verification element is encoded as a security feature, while the pattern regions (23, 25, 28, 30, 33, 35, 38, 40) are arranged phase-shiftedwith respect to the pattern regions (21, 22, 24, 26, 27, 29, 31, 32, 34, 36, 37, 39) surrounding them in one or more sub-regions (3) of the planar region (2, 5), wherein the moiré pattern has at least one line grid having a plurality of lines with a distance between the lines in the range of 40 to 200µm, and the line grid is phase-shifted in some regions to produce the hidden information, and wherein the microscopically fine pattern regions (21 to 39, 51 to 90) are further substructured according to a substructuring function, which describes a microscopic substructuring of the moiré pattern serving as a further security feature, which encodes additional information in the planar region, wherein the additional information is neither recognisable to the naked eye nor by the verification element and the substructuring function describes a discontiguous substructuring pattern (42, 44, 45) constructed from a plurality of similar individual elements, **characterised in that**,
the distances between the individual elements (44, 45) and/or the positioning thereof (46, 47, 48) is varied for encoding further information, and **in that** the intermediate planar covering of the substructuring pattern that can be resolved by the human eye still remains constant.

2. Optical security element according to claim 1,
**characterised in that**,
a reflective surface (18) is arranged in the background region (20, 50).

3. Optical security element according to claim 1,
**characterised in that**,
a second microstructure is moulded in the background region (20, 50), which is formed from a second diffraction grating which is different from the first diffraction grating.

4. Optical security element according to claim 1,
**characterised in that**,
a second microstructure is moulded in the background region (20, 50), which is formed from a diffraction structure for producing a second hologram.

5. Optical security element according to claim 1,
**characterised in that**,
a second microstructure in moulded in the background region (20, 50), which is formed from a second matting structure which is different from the first matting structure.

6. Optical security element according to claim 1,
**characterised in that**,
the line grid has regions in which the lines of the line grid are bent.

7. Optical security element according to one of claims 1 to 5,
**characterised in that**,
the moiré pattern consists of a two-dimensional grid.

## Revendications

1. Elément de sécurité optique (1) doté d'une couche de substrat (14) dans un secteur plan (2 ; 5) à partir de laquelle est formée d'une manière sectorielle une première microstructure (17) servant à générer un premier effet optiquement reconnaissable dans la couche de substrat (14),
la première microstructure (17) étant soit un premier réseau de diffraction ayant une fréquence spatiale de plus de 300 lignes/mm, soit une structure de diffraction destinée à générer un premier hologramme, soit une première structure matte, le secteur plan (2 ; 5) étant divisé en des secteurs de motifs d'une finesse microscopique (21 à 40 ; 51 à 90) et en un secteur d'arrière-plan (20 ; 50), et la première microstructure (17) étant formée dans les secteurs de motifs (21 à 39 ; 51 à 90), mais pas dans le secteur d'arrière-plan (20 ; 50), les secteurs de motifs d'une finesse microscopique (21 à 39 ; 51 à 90) étant disposés dans le secteur plan (2 ; 5) sous forme d'un motif moiré dans lequel une information cachée évaluable au moyen d'un élément de vérification associé est codée en tant que caractéristique de sécurité du fait que, dans un ou plusieurs secteurs partiels (3) du secteur plan (2 ; 5), les secteurs de motifs (23, 25, 28, 30, 33, 35, 38, 40) sont disposés décalés en phase par rapport aux secteurs de motifs (21, 22, 24, 26, 27, 29, 31, 32, 34, 36, 37, 39) les entourant, le motif moiré comportant au moins un réseau régulier ayant une pluralité de lignes présentant un écart dans la plage de 40 à 200 µm et le réseau régulier étant décalé en phase secteur par secteur à des fins de génération de l'information cachée, et les secteurs de motifs de finesse microscopique (21 à 39 ; 51 à 90) étant sous-structurés davantage selon une fonction de sous-structuration décrivant une sous-structuration microscopique du motif moiré qui sert de caractéristique de sécurité supplémentaire et qui code une information supplémentaire dans le secteur plan, l'information supplémentaire ne pouvant être détectée ni à l'oeil nu ni par l'élément de vérification et la fonction de sous-structuration décrivant un motif de sous-structuration (42, 44, 45) non contigu construit à partir une pluralité d'éléments individuels similaires, **caractérisé en ce que** les écarts entre les éléments individuels (44, 45) et/ou leur orientation (46, 47, 48) sont variés pour le codage d'une autre information et **en ce que** l'occupation des surfaces du motif de sous-structuration discernables par l'oeil humain reste toutefois constante.

2. Elément de sécurité optique selon la revendication 1,
**caractérisé en ce**
**qu'**une surface réfléchissante (18) est disposée dans le secteur d'arrière-plan (20 ; 50).

3. Elément de sécurité optique selon la revendication 1,
**caractérisé en ce**
**que** dans le secteur d'arrière-plan (20 ; 50) est formée une deuxième microstructure qui est composée d'un deuxième réseau de diffraction différent du premier réseau de diffraction.

4. Elément de sécurité optique selon la revendication 1,
**caractérisé en ce**
**que** dans le secteur d'arrière-plan (20 ; 50) est formée une deuxième microstructure qui est composée d'une structure de diffraction à des fins de génération d'un deuxième hologramme.

5. Elément de sécurité optique selon la revendication 1,
**caractérisé en ce**
**que** dans le secteur d'arrière-plan (20 ; 50) est formée une deuxième microstructure qui est composée par une deuxième structure matte différente de la première structure matte.

6. Elément de sécurité optique selon la revendication 1,
**caractérisé en ce**
**que** le réseau régulier comporte des secteurs dans lesquels les lignes du réseau régulier sont incurvées.

7. Elément de sécurité optique selon une des revendications 1 à 5,
**caractérisé en ce**
**que** le motif moiré se compose d'un réseau bidimensionnel.
